# EUROPEAN PATENT SPECIFICATION

(11) **EP 0 756 583 B1**
(45) Date of publication and mention of the grant of the patent: **19.08.1998**
(21) Application number: 95915942.7
(22) Date of filing: 20.04.1995
(51) Int. Cl.: C02F 9/00, C02F 1/00

(54) **FILTER JUG**
KANNE MIT FILTER
POT A EAU A FILTRE

(30) Priority: 20.04.1994 GB 9407799
(43) Date of publication of application: 05.02.1997
(60) Divisional application: 98101877.3
(73) Proprietor: Kenwood Marks Limited, Havant, Hampshire PO9 2NH (GB)
(72) Inventor: BADNI, Kevin, Sam, Cowplain Hampshire PO8 8EP (GB)
(74) Representative: Marsh, Robin Geoffrey
(86) International application number: GB9500901
(87) International publication number: WO9529131

(56) References cited:
- WO-A-92/08677
- GB-A- 2 269 586
- US-A- 5 190 643

## Description

This invention relates to a filter jug and more specifically to a container in the form of a filter jug for filtering liquid, particularly water.

A known type of filter jug comprises a jug body having a handle, a pouring spout and a lid. The jug body contains a hopper in its upper part in which a filter element is mounted, such that water poured in the hopper is constrained to pass through the filter element into the lower part of the jug body. The filtered water can then be poured out of the jug body via the spout.

As it is necessary to replace the filter element after a predetermined amount of usage, some known filter jugs have an indicator mounted on the jug lid which is manually turned every time the jug is filled until it indicates that the filter should be replaced. However, a disadvantage of this type of indicator is that the user must remember to turn the indicator each time the jug is filled.

A further disadvantage of known filter jugs is that the lid must be removed from the jug body in order to fill the hopper with water to be filtered.

US-A-5190643 discloses a portable water filter comprising a spouted vessel 12, a replaceable filter cartridge 14 and a lid assembly 16. Water is poured through apertures 66, 68 in the lid and thus through the filter into the vessel. The apertures 88 are in a reciprocally movable gate member 80 to align and disalign with a resilient pawl element of the gate member. The gate member is movable by means of an actuator button 86 on the lid. A display is provided when the filter cartridge only has a limited number of uses remaining.

It is an object of the present invention to provide a filter jug which alleviates the above mentioned disadvantages of such known filter jugs.

Accordingly, the invention consists in a container for filtering liquid, said container having a handle and a lid formed with an aperture through which liquid can enter the container, a cover mounted on the lid and movable by a user-operable member to open and close the aperture, a filter element accommodated in a hopper mounted in the container such that liquid entering the container via said aperture is constrained to pass through the filter element, means for registering the usage of the filter element, said registering means comprising a disc mounted for rotation on said lid and interengaging means provided on said disc and on said cover such that each movement of said cover to open said aperture causes rotation of said disc, and means visible through a window in said lid to display the registered usage of said filter element; characterised in that the display means comprise markings on the upper surface of said disc and the window is positioned over said disc such that said markings are visible through said window; and that the user-operable member is mounted on the handle such that both the container can be held by the handle and the user-operable member can be operated to open the aperture simultaneously with one hand.

The cover may be resiliently biased towards closing the aperture and may be slidably retracted to open the aperture by the user-operable member. The user-operable member may comprise a thumb grip arranged to pull the cover so as to open the aperture. Rotation of the disc and the markings provided thereon may be arranged such that one complete revolution of the disc represents the total life of the filter element.

The invention will now be described by way of example with reference to the accompanying drawings in which:-
Figure 1 is a perspective view of a filtering container or filter jug according to one embodiment of the invention;

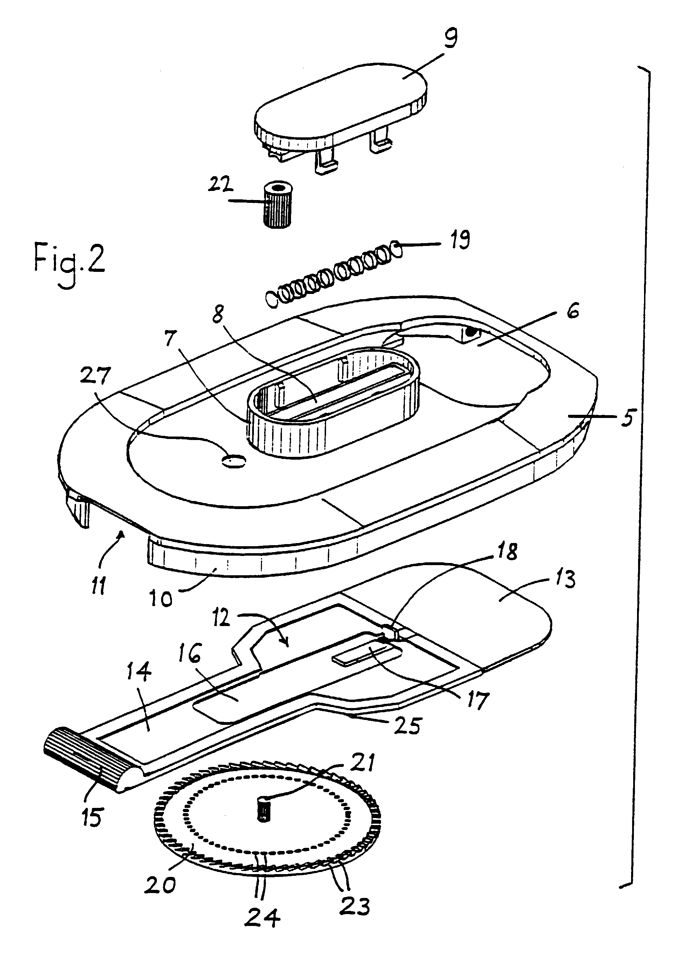

Figure 2 is an exploded view of the lid of the filter jug shown in Figure 1; and
Figures 3 and 4 are a plan and a perspective view respectively of certain of the lid components shown in Figure 2.

Referring now to the drawings, a water filter jug has a hopper 1 mounted in the upper part of its body 2, the hopper accommodating a removable filter 3. At one end of the jug body 2 is a spout 4, which communicates only with the lower part of the jug body 2, and at the opposite end of the body 2 is a handle 28.

A lid 5 fits over the jug body 2 so as to enclose the hopper 1. Towards the spout end of the lid 5 is an oval aperture 6, and the lid has at its centre a longitudinal oval housing 7, which provides a knob to remove the lid from the jug body and which contains a channel 8 and is closed by a cap 9. The lid 5 also has a peripheral skirt 10 depending from its edge and ensuring a good fit inside the rim of the hopper 1, and in the handle end of the skirt 10 is provided an opening 11.

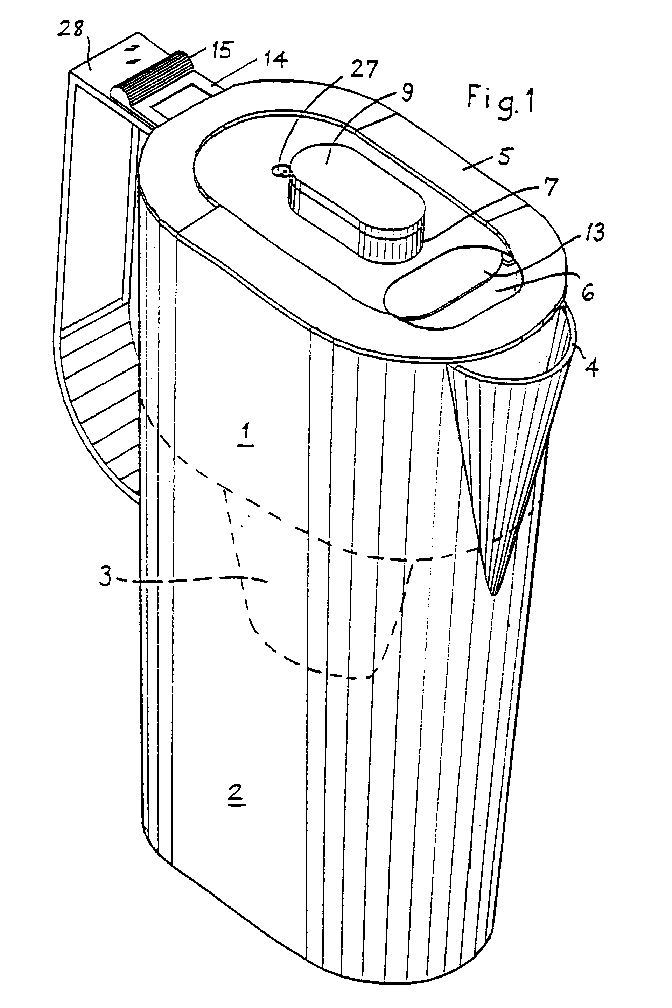

A slidable plate 12 has a portion 13 which acts as a cover to close the aperture 6. An elongated portion 14 of the plate 12 extends through the skirt opening 11 and has at its end a user-operable thumb grip 15. As can be seen in Figure 1, the thumb grip 15 overlies the upper part of the handle 28 of the jug.

The plate 12 has a central longitudinal slot 16 which partly extends into the elongated portion 14. A flange 17 extending into the slot 16, and a vertical lug 18 are provided adjacent the cover portion 13. A resilient member such as a spring 19 rests on the flange 17 and is located in the channel 8 with one end bearing against the lug 18 which protrudes into the channel 8. The other end of the spring 19 bears against the opposite end of the channel 8.

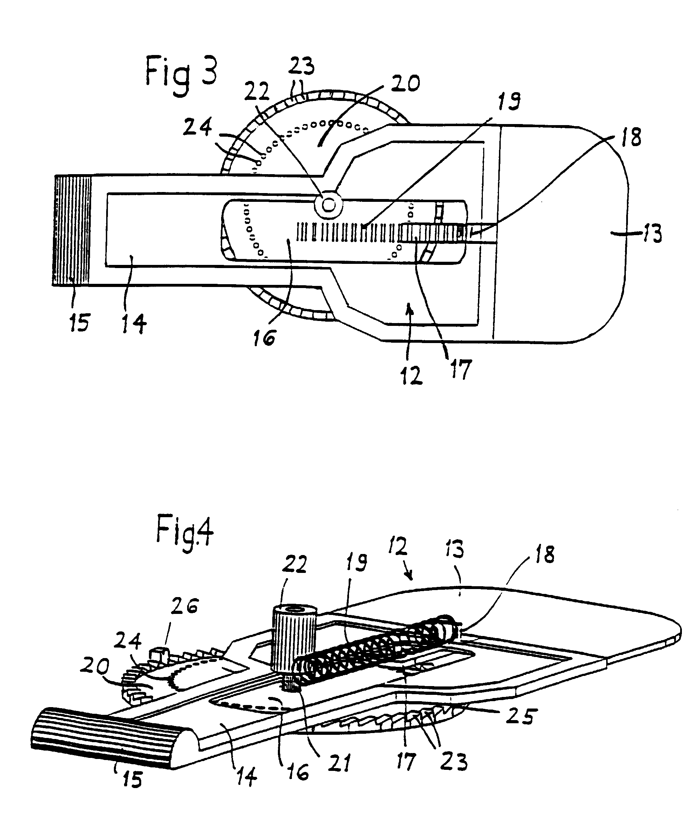

A rotary disc 20 is located below the plate 12, and at the centre of the disc 20 is an axle 21 which extends up through a hole (not shown) in the lid 5, inside the housing 7, and is received in a cylindrical disc holder 22 which allows rotation of the disc 20. Around the periphery of the disc 20 are a plurality of equally spaced teeth 23 which engage with a tooth 25 on the underside of the plate 12 to form a ratchet mechanism. An opposing tooth 26, seen in Figure 4, is provided on the underside of the lid 5 and is arranged to engage with the disc teeth 23 at a position substantially opposite the tooth 25. The upper surface of the disc 20 has markings 24 in any suitable form which can be viewed through a window 27 in the lid 5.

In order to enable water to enter the hopper 1, the aperture 6 is opened by pulling the plate 12 towards the handle 28, against the bias of the spring 19, by means of the thumb grip 15. As the plate moves, the tooth 25, which engages with the disc teeth 23, rotates the disc 20 clockwise through a preset angle depending on the number of teeth 25 and causes a different marking 24 to be visible through the window 27.

When the thumb grip 15 is released the spring 19 urges the lug 18 and hence the entire plate 12 towards the spout, thereby reclosing the aperture 6 with the cover portion 13. The tooth 25 slides over the sloping face of the tooth 23 with which it is engaged and the opposing tooth 26 prevents any anti-clockwise rotation of the disc 20.

The rotary disc 20 thus registers each time water can enter the hopper 1 via the open aperture 6 and the visible markings 24 on the disc 20 indicate the remaining useful life of the replaceable filter. In one example, the rotation of the disc and its markings may be arranged such that one complete revolution of the disc represents the total life of each filter element. Unlike known filter jugs, the hopper can be filled via the aperture 6 without removing the lid 5, and the jug can be held by the handle and the aperture can be opened by means of the thumb grip 15 simultaneously with one hand. This enables the hopper 1 to be easily and quickly filled, for example from a running tap, via the aperture 6 with the corresponding usage of the filter being automatically registered by the rotary disc 20.

Whilst a particular embodiment of the invention has been described, various modifications may be envisaged without departing from the scope of the invention, as defined in the appended claims. For example, instead of the thumb grip 15 which uses a linear sliding movement to move the cover portion 13 and thus open the aperture 6, the cover portion may be moved by means of a user-operable rotary member.

## Claims

1. A container for filtering liquid, said container having a handle (28) and a lid (5) formed with an aperture (6) through which liquid can enter the container, a cover (12,13) mounted on the lid (5) and movable by a user-operable member (15) to open and close the aperture (6), a filter element (3) accommodated in a hopper (1) mounted in the container such that liquid entering the container via said aperture (6) is constrained to pass through the filter element (3), means (20,23,25) for registering the usage of the filter element (3), said registering means comprising a disc (20) mounted for rotation on said lid (5) and interengaging means (23,25) provided on said disc (20) and on said cover (12,13) such that each movement of said cover (12,13) to open said aperture (6) causes rotation of said disc (20), and means (24) visible through a window (27) in said lid (5) to display the registered usage of said filter element (3); characterised in that the display means (24) comprise markings (24) on the upper surface of said disc (20) and the window (27) is positioned over said disc (20) such that said markings (24) are visible through said window (27); and in that the user-operable member (15) is mounted on the handle (28) such that both the container can be held by the handle (28) and the user-operable member (15) can be operated to open the aperture (6) simultaneously with one hand.

2. A container as claimed in claim 1, wherein the cover (12,13) is slidably retracted to open the aperture (6) by said user-operable member (15).

3. A container as claimed in claim 1 or 2, wherein said cover (12,13) is resiliently biased towards closing the aperture (6).

4. A container as claimed in claim 1, 2 or 3, wherein the user-operable member (15) comprises a thumb grip (15) arranged to pull the cover (12,13) so as to open the aperture (6).

5. A container as claimed in any preceding claim, wherein the rotation of said disc (20) and the markings (24) provided thereon are arranged such that one complete revolution of the disc (20) represents the total life of the filter element (3).

6. A container as claimed in any preceding claim, wherein said interengaging means (23,25) comprise interengaging teeth (23,25) provided on said disc (20) and on said cover (12,13) so as to form a ratchet mechanism.

## Patentansprüche

1. Behälter zum Filtern von Flüssigkeiten mit einem Griff (28) und einem Deckel (5) mit einer ausgeformten Öffnung (6), durch die Flüssigkeiten in den Behälter eindringen können, einer Abdeckung (12, 13), welche auf dem Deckel (5) angebracht und mittels eines vom Benutzer betätigbaren Teils (15) zum Öffnen und Schließen der Öffnung (6) beweglich ist, einem in einem Trichter (1) sitzenden Filterelement (3), welches so in dem Behälter angebracht ist, daß in den Behälter durch die Öffnung (6) eindringende Flüssigkeiten so aufgehalten werden, daß sie durch das Filterelement (3) hindurchtreten, Mitteln (20, 23, 25) zum Registrieren der Benutzung des Filterelements (3), wobei die Registrierungsmittel eine drehbar auf dem Deckel (5) angeordnete Scheibe (20) und an der Scheibe (20) und an der Abdeckung (12, 13) vorgesehene Eingriffsmittel (23, 25) enthalten, derart, daß jede Bewegung der Abdeckung (12, 13) zum Öffnen der Öffnungen (6) eine Drehung der Scheibe (20) bewirkt, und durch ein Fenster (27) in dem Deckel (5) sichtbare Mittel (24) zum Anzeigen der registrierten Benutzung des Filterelements (3), dadurch gekennzeichnet, daß die Anzeigemittel (24) Markierungen (24) an der obenliegenden Oberfläche der Scheibe (20) aufweisen und das Fenster (27) derart über der Scheibe (20) angeordnet ist, daß die Markierungen (24) durch das Fenster (27) sichtbar sind, und das vom Benutzer betätigbare Teil (15) an dem Griff (28) derart angebracht ist, daß sowohl der Behälter an dem Griff (28) gehalten als auch das vom Benutzer betätigbare Teil (15) gleichzeitig zum Öffnen der Öffnung (6) mit einer Hand betätigt werden kann.

2. Behälter nach Anspruch 1, wobei die Abdeckung (12, 13) zum Öffnen der Öffnung (6) durch das vom Benutzer betätigbare Teil (15) durch Verschieben zurückgezogen wird.

3. Behälter nach Anspruch 1 oder 2, wobei die Abdeckung (12, 13) mit elastischer Vorspannung in Richtung auf ein Schließen der Öffnung (6) versehen ist.

4. Behälter nach Anspruch 1, 2 oder 3, wobei das vom Benutzer betätigbare Teil (15) einen Daumengriff (15) enthält, welcher zum Zurückziehen der Abdeckung (12, 13) zum Zwecke des Öffnens der Öffnung (6) angeordnet ist.

5. Behälter nach einem der vorstehenden Ansprüche, wobei die Drehung der Scheibe (20) und der darauf vorgesehenen Markierungen (24) derart ausgestaltet sind, daß eine vollständige Umdrehung der Scheibe (20) der Gesamt-Lebensdauer des Filterelements (3) entspricht.

6. Behälter nach einem der vorstehenden Ansprüche, wobei die Eingriffsmittel (23, 25) an der Scheibe (20) und an der Abdeckung (12, 13) vorgesehene, untereinander im Eingriff befindliche Zähne (23, 25) umfassen, so daß ein Ratschenmechanismus gebildet wird.

## Revendications

1. Récipient pour filtrer un liquide, ledit récipient comportant une poignée (28) et un couvercle (5) formé avec une ouverture (6) par laquelle du liquide peut entrer dans le récipient, un tiroir de recouvrement (12, 13) qui est monté sur le couvercle (5) et qu'un élément (15), manoeuvrable par un utilisateur, peut déplacer pour ouvrir et fermer l'ouverture (6), un élément filtrant (3) logé dans une trémie (1) montée dans le récipient de façon telle que le liquide entrant dans le récipient par ladite ouverture (6) est obligé de passer à travers l'élément filtrant (3), des moyens (20, 23, 25) pour enregistrer l'usage de l'élément filtrant (3), lesdits moyens d'enregistrement comprenant un disque (20) monté à rotation sur ledit couvercle (5) et des moyens de venue mutuelle en prise (23, 25) prévus sur ledit disque (20) et sur ledit tiroir (12, 13) de façon que chaque mouvement dudit tiroir (12, 13) pour ouvrir ladite ouverture (6) provoque la rotation dudit disque (20), et des moyens (24), visibles par une fenêtre (27) prévue dans ledit couvercle (5), pour afficher l'usage enregistré dudit élément filtrant (3); caractérisé par le fait que les moyens d'affichage (24) comportent des repères (24) sur la surface supérieure dudit disque (20) et que la fenêtre (27) est positionnée par-dessus ledit disque (20) de façon que lesdits repères (24) soient visibles à travers ladite fenêtre (27); et par le fait que l'élément (15) manoeuvrable par l'utilisateur est mont sur la poignée (28) de façon qu'il soit possible à la fois de tenir le récipient par la poignée (28) et, simultanément, d'une seule main, de manoeuvrer l'élément (15) manoeuvrable par l'utilisateur pour ouvrir l'ouverture (6).

2. Récipient comme revendiqué dans la revendication 1, dans lequel, pour ouvrir l'ouverture (6), le tiroir (12, 13) se rétracte en glissant sous l'action dudit élément (15) manoeuvrable par l'utilisateur.

3. Récipient comme revendiqué dans la revendication 1 ou 2, dans lequel ledit tiroir (12, 13) est contraint élastiquement en direction de la fermeture de l'ouverture (6).

4. Récipient comme revendiqué dans la revendication 1, 2 ou 3, dans lequel l'élément (15) manoeuvrable par l'utilisateur comporte un poucier (15) prévu pour tirer le tiroir (12, 13) de façon à ouvrir l'ouverture (6).

5. Récipient comme revendiqué dans l'une quelconque des revendications précédentes, dans lequel la rotation dudit disque (20) et des repères (24) qui y sont prévus est conçue de façon qu'un tour complet du disque (20) représente la durée de vie totale de l'élément filtrant (3).

6. Récipient comme revendiqué dans l'une quelconque des revendications précédentes dans lequel lesdits moyens de venue mutuelle en prise (23, 25) comportent des dents (23, 25) de venue mutuelle en prise prévues sur ledit disque (20) et ledit tiroir (12, 13) de façon à former un mécanisme à cliquet.
